# EUROPÄISCHE PATENTSCHRIFT

(11) **EP 0 832 397 B1**
(45) Veröffentlichungstag und Bekanntmachung des Hinweises auf die Patenterteilung: **01.03.2000**
(21) Anmeldenummer: 96915990.4
(22) Anmeldetag: 11.06.1996
(51) Int. Cl.: F23R 3/40, F23R 3/34, F02C 3/28

(54) **KATALYTISCHE GASTURBINENBRENNER**
CATALYTIC GAS TURBINE BURNER
BRULEUR A TURBINE A GAZ CATALYTIQUE

(30) Priorität: 12.06.1995 DE 19521308
(43) Veröffentlichungstag der Anmeldung: 01.04.1998
(73) Patentinhaber: SIEMENS AKTIENGESELLSCHAFT, 80333 München (DE)
(72) Erfinder: HUMS, Erich, D-91093 Hessdorf (DE); VORTMEYER, Nicolas, D-45130 Essen (DE)
(86) Internationale Anmeldenummer: DE9601018
(87) Internationale Veröffentlichungsnummer: WO9641990

(56) Entgegenhaltungen:
- FR-A- 2 209 892
- FR-A- 2 228 535
- GB-A- 209 128
- GB-A- 2 268 694
- US-A- 4 202 169
- US-A- 4 519 992
- US-A- 5 048 284
- PATENT ABSTRACTS OF JAPAN vol. 010, no. 216 (M-502), 29.Juli 1986 & JP 61 053425 A (HITACHI LTD), 17.März 1986,

## Beschreibung

Die Erfindung bezieht sich auf eine Gasturbine zur Verbrennung eines Brenngases.

Eine Gasturbine besteht üblicherweise aus einem Kompressorteil, einem Brennerteil und einem Turbinenteil. Der Kompressorteil und der Turbinenteil befinden sich üblicherweise auf einer gemeinsamen Welle, die gleichzeitig einen Generator zur Elektrizitätserzeugung antreibt. Im Kompressorteil wird vorgewärmte Frischluft auf den im Brennerteil erforderlichen Druck verdichtet. Im Brennerteil wird die verdichtete und vorgewärmte Frischluft mit einem Brennstoff, wie z.B. Erdgas oder Erdöl, verbrannt. Das heiße Brennerabgas wird dem Turbinenteil zugeführt und dort entspannt.

Eine detaillierte Information über den Aufbau und die Verwendung von Gasturbinen gibt die Firmenschrift "Gasturbines and Gasturbine Power Plants" der Siemens AG, Mai 1994, Bestellnr. A 96001-U 124-A 259-V 1-7600.

Bei der Verbrennung der verdichteten und vorgewärmten Frischluft mit dem Brenngas entstehen als besonders unerwünschte Verbrennungsprodukte auch Stickoxide NOₓ. Diese Stickoxide gelten neben Schwefeldioxid als Hauptverursacher für das Umweltproblem des sauren Regens. Man ist daher - auch aufgrund strenger gesetzlicher Grenzwertvorgaben für den NOₓ-Ausstoß - gewillt, den NOₓ-Ausstoß von einer Gasturbine besonders gering zu halten und dabei gleichzeitig die Leistung der Gasturbine weitgehend nicht zu beeinflussen.

So wirkt beispielsweise die Flammtemperatur-Absenkung im Brennerteil als stickoxidmindernd. Hierbei wird dem Brenngas oder der komprimierten und vorgewärmten Frischluft Wasserdampf zugefügt oder Wasser in den Brennraum eingespritzt.

Solche Maßnahmen, die den Stickoxidausstoß der Gasturbine per se verringern, werden als Primärmaßnahmen zur Stickoxidminderung bezeichnet.

Dementsprechend werden als Sekundärmaßnahmen alle Maßnahmen bezeichnet, bei denen einmal im Abgas einer Gasturbine - oder auch grundsätzlich eines Verbrennungsprozesses - enthaltene Stickoxide durch nachträgliche Maßnahmen verringert werden.

Hierzu hat sich weltweit das Verfahren der selektiven katalytischen Reduktion (SCR) durchgesetzt, bei dem die Stickoxide zusammen mit einem Reduktionsmittel, meist Ammoniak, an einem Katalysator kontaktiert werden und dabei Stickstoff und Wasser bilden. Mit dem Einsatz dieser Technologie ist daher zwangsläufig der Verbrauch von Reduktionsmittel verbunden. Die im Abgaskanal angeordneten Katalysatoren zur Stickoxidminderung verursachen naturgemäß einen Druckabfall in dem Abgaskanal, der einen Leistungsabfall der Turbine nach sich zieht. Selbst ein Leistungsabfall in Höhe von einigen Promille wirkt sich bei einer Leistung der Gasturbine von beispielsweise 150 MW und einem Stromverkaufspreis von etwa 0,15 DM/kWh Strom gravierend auf das mit einer solchen Einrichtung erzielbare Ergebnis aus.

Neuere Überlegungen bezüglich der Ausgestaltung des Brennerteils gehen dahin, daß die üblicherweise eingesetzten Diffusionsbrenner oder drallstabilisierten Vormischbrenner durch eine katalytische Brennkammer ersetzt werden. Mit einer katalytischen Brennkammer werden niedrigere Stickoxid-Emissionen erreicht als dies mit den obengenannten Brennertypen möglich ist. Auf diese Weise können die bekannten Nachteile des SCR-Verfahrens (große Katalysatorvolumina, Reduktionsmittel-Verbrauch, hoher Druckverlust) überwunden werden.

Ein Nachteil einer katalytischen Brennkammer und ebenfalls einer herkömmlichen Brennkammer besteht in der zur Verbrennung notwendigen Zündtemperatur, die im Fall der Verwendung von Erdgas bei einem Wert von etwa 400 °C liegt. Diese Tatsache schränkt den Arbeitsbereich der Brennkammer in einer Gasturbine zu stark ein und macht den Einsatz eines Hilfsbrenners erforderlich, der naturgemäß eine Stickoxidquelle darstellt.

Aus der US-PS 5,048,284 ist hierzu bekannt, Brenngas über einen katalytischen Reformer zu führen. Dabei steht gemäß dem Reforming-Prozeß Methan und Wasser mit Wasserstoff und Kohlenmonoxid in einem Gleichgewicht, so daß ein Teil des Methans in Wasserstoff übergeführt wird. Dabei ist das Brenngas entweder Methan oder ein höheres Alkan, welches zu Methan zersetzt wird. Das reformierte Brenngas wird anschließend der Brennkammer zugeführt, wobei ausschließlich Wasserstoff zu einer Absenkung der Zündtemperatur führt. Zudem ist die Umsetzrate des Reforming-Prozesses relativ gering.

Der Erfindung liegt die Aufgabe zugrunde, ebenfalls durch Absenkung der Zündtemperatur und ohne Verwendung eines Hilfsbrenners den über die katalytische Stufe geführten Teil des Brenngases noch besser katalytisch umzuformen.

Diese Aufgabe wird erfindungsgemäß dadurch gelöst, daß eine Gasturbine zur Verbrennung eines Brenngases vorgesehen ist, bei der ein Leitungssystem derart vorgesehen ist, daß ein Teil des Brenngases abgezogen, über eine katalytische Stufe geleitet und anschließend wieder dem Brenngas zur Absenkung seiner Zündtemperatur zugeführt wird, wobei die katalytische Stufe eine Präformierungsstufe ist, welche eine Katalysatoranlage umfaßt, die zur Umformung des im Brenngas enthaltenen Kohlenwasserstoffs in einen Alkohol und/oder ein Aldehyd vorgesehen ist.

Auf diese Weise wird der abgezogene Brennstoff-Teilstrom in dem Präformierungsschritt im Gegensatz zu dem Reforming-Prozeß in die katalytisch leicht verbrennbaren Stoffe Alkohol und/oder Aldehyd zerlegt. Dabei werden durch unvermeidbare Nebenreaktionen auch andere Stoffe, wie z.B. Wasserstoff, gebildet. Der präformierte Brenngas-Teilstrom wird dem übrigen Brenngas-Strom wieder zugeführt, so daß das auf diese Weise hergestellte Gemisch eine tiefer liegende Zündtemperatur aufweist, als dies bei dem ursprünglichen Brenngas, wie z.B. Erdgas, der Fall ist. Die genannten teiloxidierten Verbindungen Alkohol und Aldehyd führen dabei neben Wasserstoff zusätzlich zu einer Absenkung der Zündtemperatur und damit zu einer gegenüber dem Stand der Technik verbesserten Stickoxidreduktion im Abgas einer Gasturbine. Unter der Zuführung dieses präformierten Brenngas-Teilstromes zur Absenkung der Zündtemperatur des Brenngases wird einerseits verstanden, daß der präformierte Brenngas-Teilstrom zunächst dem Brenngas zugeführt und anschließend mit der Verdichterluft vermischt wird. Andererseits kann aber auch vorgesehen sein, daß der präformierte Brenngas-Teilstrom einem Gasgemisch zugeführt wird, welches aus der Verdichterluft und dem übrigen Brenngas-Teilstrom besteht. Die auf diese Weise gewonnenen vergleichsweise leicht zündenden Gasgemische weisen in Abhängigkeit von der Menge des abgezogenen und anschließend präformierten Brenngas-Teilstroms eine Zündtemperatur im Bereich von 200 bis 350 °C auf.

Zur besonders guten Präformierung des abgezogenen Brenngas-Teilstroms kann es vorgesehen sein, daß die Präformierungsstufe in Strömungsrichtung des Brenngas-Teilstroms eine Vorwärmeinrichtung für den Brenngas-Teilstrom umfaßt. Die Vorwärmeinrichtung kann insbesondere dann vorgesehen sein, wenn der Brenngas-Teilstrom unvorgewärmt in die Präformierungsstufe eintritt. Eine für die anschließende Präformierung in der Katalysatoranlage vorteilhafte Temperatur des Brenngas-Teilstroms am Eintritt der Katalysatoranlage kann bei etwa 100 °C liegen.

Bezüglich der Katalysatoranlage ist es für die Umsetzung von Kohlenwasserstoffen in Alkohole und/oder Aldehyde besonders vorteilhaft, wenn die Katalysatoranlage einen waben- und/oder plattenförmigen Katalysator umfaßt, der im wesentlichen aus Titandioxid TiO₂ besteht und mindestens ein Übergangsmetalloxid und/oder mindestens ein Edelmetall umfaßt. Unter Übergangsmetalloxiden werden insbesondere die Oxide der 3d-Reihe und der 4f-Reihe (Lanthanoiden, Seltene Erdmetalle) im periodischen System der Elemente verstanden. Geeignete Edelmetalle sind insbesondere Rhodium, Iridium, Palladium, Platin. Insbesondere eignen sich Molybdänoxid, Wolframoxid, Vanadiumoxid, Chromoxid, Eisenoxid, Ceroxid, Manganoxid, Nickeloxid und Cobaldoxid. Weiter können auch noch Metalloxide vom Spinell-Typ der vorstehend genannten Metalle und Metalloxide verwendet sein.

Eine verfahrenstechnisch besonders vorteilhafte Lösung sieht es vor, daß maximal 25 Vol. % des Brenngases abgezogen und anschließend über die Präformierungsstufe geleitet werden. Diese Begrenzung definiert einen bevorzugten Bereich, bei dem der Aufwand (Katalysatorvolumen) im Vergleich zum Nutzen (katalytische Zündtemperaturabsenkung) zueinander ausgewogen ist.

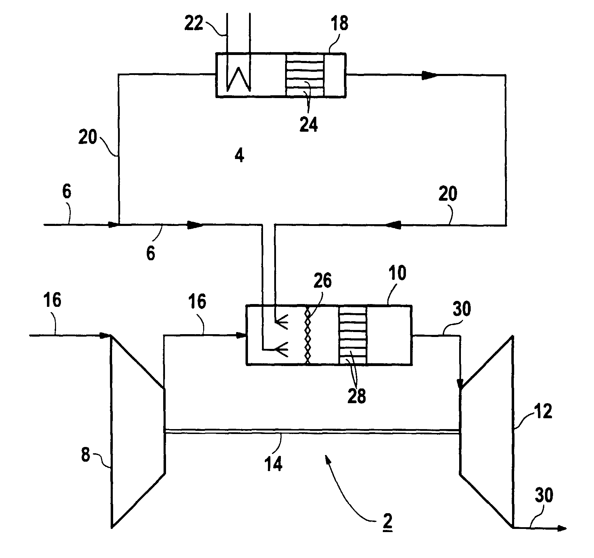

Ausführungsbeispiele der Erfindung werden anhand einer Figur näher erläutert. Dabei zeigt die Figur in schematischer Darstellung eine Gasturbine 2 mit einem Leitungssystem 4 zur Erzielung einer vergleichsweise geringen katalytischen Zündtemperatur eines Brenngases 6. Die Gasturbine besteht aus einem Verdichterteil 8, einer katalytischen Brennkammer 10 und einem Entspannungsteil 12. Der Verdichterteil 8 und der Entspannungsteil 12 sind auf einer gemeinsamen Welle 14 angeordnet, über die ein hier nicht weiter dargestellter Generator zur Elektrizitätserzeugung angetrieben wird. Im Verdichterteil 8 wird vorgewärmte Luft 16 auf den Eintrittsdruck der katalytischen Brennkammer 10 verdichtet. Für das Brenngas 6, im Ausführungsbeispiel Erdgas, ist ein Leitungssystem 4 vorgesehen, mit dem ein Teil des Brenngases 6, hier etwa 15 Vol. %, einer Präformierungsstufe 18 als Brenngas-Teilstrom 20 zugeführt wird. Das übrige Brenngas 6 wird direkt der katalytischen Brennkammer 10 zugeführt.

Der Brenngas-Teilstrom 20 wird in der Präformierungsstufe 18 zunächst mittels eines Wärmetauschers 22 auf etwa 100 °C erwärmt. Der erwärmte Brenngas-Teilstrom 20 durchströmt anschließend Wabenkatalysatoren 24, die im wesentlichen aus Titandioxid bestehen und ein Gemisch von Vanadiumoxid, Wolframoxid, Molybdänoxid, Platin und Rhodium umfassen. Bedingt durch die katalytische Wirkung der Wabenkatalysatoren 24 wird der größte Teil des Brenngas-Teilstroms 20 präformiert, d.h. aus dem Erdgas 6 bilden sich die katalytisch leicht zündenden Stoffe Alkohol, Aldehyd und Wasserstoff. Der auf diese Weise präformierte Brenngas-Teilstrom 20 wird ebenfalls der katalytischen Brennkammer 10 zugeführt.

In der katalytischen Brennkammer 10 wird das Brenngas 6, der präformierte Brenngas-Teilstrom 20 und die vorgewärmte und verdichtete Luft 16 mittels eines Mischelements, z.B. eines statischen Mischers 26, vermischt und anschließend geeigneten Katalysatoren, hier Wabenkatalysatoren 28, zugeführt. Die Wabenkatalysatoren 28 weisen eine besonders starke Oxidationswirkung zur katalytischen Verbrennung von Brenngas 6, Brenngas-Teilstrom 20 und vorgewärmter, verdichteter Luft 16 auf. Sie weisen im Ausführungsbeispiel als Grundstoff Titandioxid TiO₂ auf und umfassen als katalytische aktive Komponenten Platin, Rhodium, Iridium sowie Ceroxid und Chromoxid auf. Die vorstehend genannten Edelmetalle sind zu jeweils 1 Gew.-% und die vorstehend genannten Metalloxide sind zu jeweils 3 Gew.-% in den Wabenkatalysatoren 28 vorhanden. Es sind jedoch auch andere Zusammensetzungen der katalytisch aktiven Komponenten möglich.

Aufgrund der Präformierung des Brenngas-Teilstroms 20 zündet das mittels des statischen Mischers 26 vermischte Gasgemisch bereits bei einer Temperatur von etwa 250 °C und verbrennt anschließend vollständig in den Wabenkatalysatoren 28. Das in den Entspannungsteil eintretende heiße Brennerabgas 30 der katalytischen Brennkammer 10 weist eine Temperatur von etwa 1100 °C auf und wird im Entspannungsteil 12 entspannt. Nach der Entspannung des Brennerabgases 30 wird es einem hier nicht weiter dargestellten Abhitzedampferzeugers zugeführt. Aufgrund der vergleichsweisen niedrigen katalytischen Zündtemperatur des in der katalytischen Brennkammer 10 verbrannten Gasgemisches kann auf den Einsatz eines Hilfsbrenners, der eine Stütz- oder Pilotflamme erzeugt, ganz verzichtet werden. Damit scheidet dieser Hilfsbrenner auch als Stickoxidquelle aus, so daß das Brennerabgas 30 bei Austritt aus dem Entspannungsteil 12 einen vergleichsweise niedrigen Stickoxidgehalt besitzt.

## Patentansprüche

1. Gasturbine (2) zur Verbrennung eines Brenngases (6), wobei ein Leitungssystem (4) derart vorgesehen ist, daß ein Teil (20) des Brenngases (6) abgezogen, über eine katalytische Stufe geleitet und anschließend wieder dem Brenngas (6) zur Absenkung seiner katalytischen Zündtemperatur zugeführt wird, wobei die katalytische Stufe eine Präformierungsstufe (18) ist, welche eine Katalysatoranlage (24) umfaßt, die zur Umformung eines im Brenngas (6) enthaltenen Kohlenwasserstoffs in einen Alkohol und/oder ein Aldehyd vorgesehen ist.

2. Gasturbine (2) nach Anspruch 1,
**dadurch gekennzeichnet**, daß die Präformierungsstufe (18) in Strömungsrichtung des Brenngas-Teilstroms (20) eine Vorwärmeinrichtung (22) für den Brenngas-Teilstrom (20) umfaßt.

3. Gasturbine (2) nach einem der Ansprüche 1 bis 2,
**dadurch gekennzeichnet**, daß die Katalysatoranlage (24) einen waben- und/oder plattenförmigen Katalysator (24) umfaßt, der im wesentlichen aus Titandioxid besteht und mindestens ein Übergangsmetalloxid und/oder mindestens ein Edelmetall umfaßt.

4. Gasturbine (2) nach einem der Ansprüche 1 bis 3,
**dadurch gekennzeichnet**, daß etwa maximal 25 Vol. % des Brenngases abgezogen und über die Präformierungsstufe (18) geleitet werden.

5. Gasturbine (2) nach einem der Ansprüche 1 bis 4,
**gekennzeichnet durch** eine katalytische Brennkammer (10).

## Claims

1. Gas turbine (2) for the combustion of a fuel gas (6), a conduit system (4) being provided in such a way that part (20) of the fuel gas (6) is drawn off, is guided via a catalytic stage and is subsequently fed to the fuel gas (6) again in order to lower its catalytic ignition temperature, the catalytic stage being a preforming stage (18) comprising a catalyst system (24) which is provided for converting a hydrocarbon contained in the fuel gas (6) into an alcohol and/or an aldehyde.

2. Gas turbine (2) according to Claim 1, characterized in that the preforming stage (18) comprises, in the direction of flow of the part stream (20) of fuel gas, a preheating device (22) for the part stream (20) of fuel gas.

3. Gas turbine (2) according to one of Claims 1 and 2, characterized in that the catalyst system (24) comprises a honeycombed and/or plate-like catalyst (24) which consists essentially of titanium dioxide and which comprises at least one transition-metal oxide and/or at least one precious metal.

4. Gas turbine (2) according to one of Claims 1 to 3, characterized in that a maximum of about 25% by volume of the fuel gas is drawn off and is guided via the preforming stage (18).

5. Gas turbine (2) according to one of Claims 1 to 4, characterized by a catalytic combustion chamber (10) .

## Revendications

1. Turbine (2) à gaz pour brûler un gaz (6) combustible, un système (4) de conduites étant prévu de telle sorte qu'une partie (20) du gaz (6) combustible est soustraite, envoyée à un étage catalytique, puis retournée au gaz (6) combustible afin d'abaisser sa température d'inflammation catalytique, l'étage catalytique étant un étage (18) de préformage, qui comprend un pot (24) catalytique qui est prévu pour transformer un hydrocarbure contenu dans le gaz (6) combustible en un alcool et/ou en un aldéhyde.

2. Turbine (2) à gaz suivant la revendication 1, **caractérisée** en ce que l'étage (18) de préformage comprend, dans la direction d'écoulement du flux (20) partiel de gaz combustible, un dispositif (22) de préchauffage pour le flux (20) partiel de gaz combustible.

3. Turbine (2) à gaz suivant la revendication 1 ou 2, **caractérisée** en ce que le pot (24) catalytique est un pot catalytique (24) alvéolaire et/ou en forme de plaque, qui est constitué pour l'essentiel de dioxyde de titane et comprend au moins un oxyde de métal de transition et/ou au moins un métal précieux.

4. Turbine (2) à gaz suivant l'une des revendications 1 à 3, **caractérisée** en ce qu'on soustrait au maximum environ 25% (en volume) du gaz combustible, pour l'envoyer à l'étage (18) de préformage.

5. Turbine (2) à gaz suivant l'une des revendications 1 à 4, **caractérisée** par une chambre (10) de combustion catalytique.
